# EUROPEAN PATENT APPLICATION

(11) **EP 2 487 402 A1**
(43) Date of publication of application: **15.08.2012**
(21) Application number: 10734885.6
(22) Date of filing: 29.01.2010
(51) Int. Cl.: F21S 2/00, F21Y 101/02

(54) **LIGHT SOURCE MODULE AND ELECTRONIC APPARATUS PROVIDED WITH SAME**

(30) Priority: 07.10.2009 JP 2009233933
(71) Applicant: Sharp Kabushiki Kaisha, Osaka-shi, Osaka 545-8522 (JP)
(72) Inventor: WAKAMURA, Sayuri, Osaka 545-8522 (JP); KOKUBO, Fumio, Osaka 545-8522 (JP); NAGURA, Hideaki, Osaka 545-8522 (JP)
(74) Representative: Müller - Hoffmann & Partner
(86) International application number: PCT/JP2010/000535
(87) International publication number: WO 2011/043002

(57) **Abstract**

Each light guide (21) has a fixed part (21b), formed at at least one side edge of a cross-section of the light guide (21) orthogonal to the length of the light guide (21), with which the light guide (21) is fixed to a chassis. The fixed part (21b) is thinner than the other side edge of the cross-section of the light guide (21) orthogonal to the length of the light guide (21) or a thick-walled part (21c) that is a central part of the cross-section of the light guide (21) orthogonal to the length of the light guide (21). Light scatterers (23) vary in density of arrangement between (i) a region where the light guide (21) varies in thickness between the thick-walled part (21c) and the fixed part (21b) and (ii) other regions along a direction orthogonal to the length of the light guide (21). Thus, the light guide (21) can be fixed via the fixed part (21b), and the influence on the optical characteristic by the provision of the thin-walled fixed part (21b) can be compensated for by providing the light scatterers (23) whose density of arrangement along the lateral direction has been adjusted.

## Description

### Technical Field

The present invention relates to: a light source module which, for the purpose of achieving a reduction in thickness, for example, of a liquid crystal display apparatus, is used as a backlight including a side-edge (referred to also as "side-light") light guide plate through which light from light sources is emitted in planar form; and an electronic apparatus including such a light source module.

### Background Art

In recent years, for the purpose of achieving a reduction in thickness of liquid crystal display apparatuses, backlights has been in heavy usage each of which includes a side-edge type (referred to also as "side-light type") light guide plate through which light from light sources is emitted in planar form.

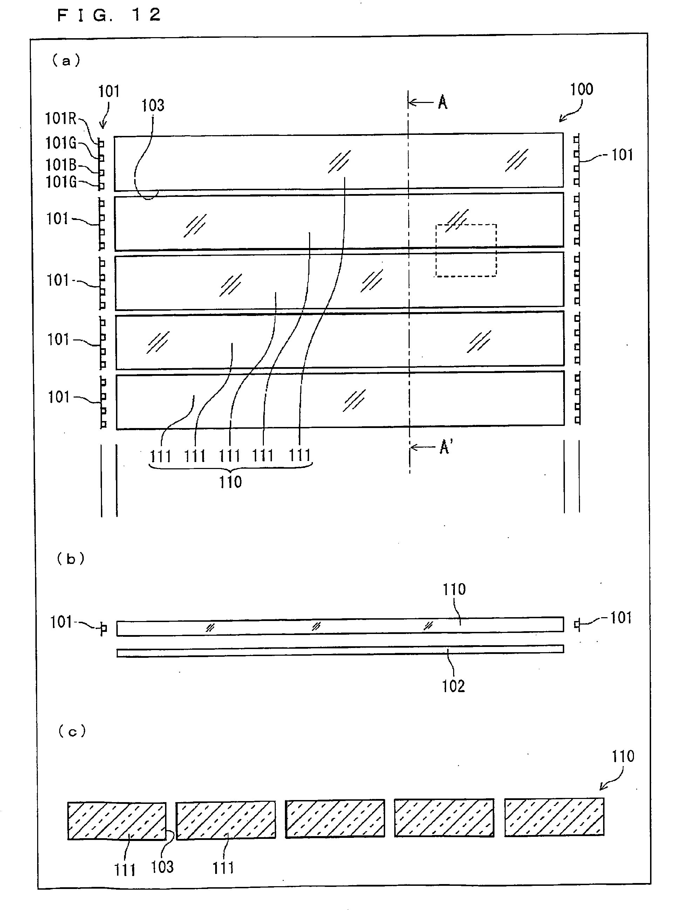

Such a side-edge type light guide plate is included, for example, in an illumination device disclosed in Patent Literature 1. Fig. 12 schematically shows the configuration of the illumination device disclosed in

Patent Literature 1. The illumination device 100 disclosed in Patent Literature 1 includes: a light guide plate 110 composed of a plurality of light guides 111 arranged in a line; and a plurality of light sources 101, provided for each separate one of the light guides 111 of the light guide plate 110, which irradiate the light guides 111 with light. The light sources 101 are each composed of one red LED (light-emitting diode) 101R, two green LEDs 101G, and one blue LED 101B (see (a) of Fig. 12). Further, the light guide plate 110 has a reflecting sheet 102 provided therebelow (see (b) of Fig. 12). Moreover, each of the light guides 111 is separated from its adjacent light guide 111 by a gap 103 composed of an air layer of 0.1 µm or greater (see (c) of Fig. 12). This configuration makes it possible to carry out a pseudo impulse-type display.

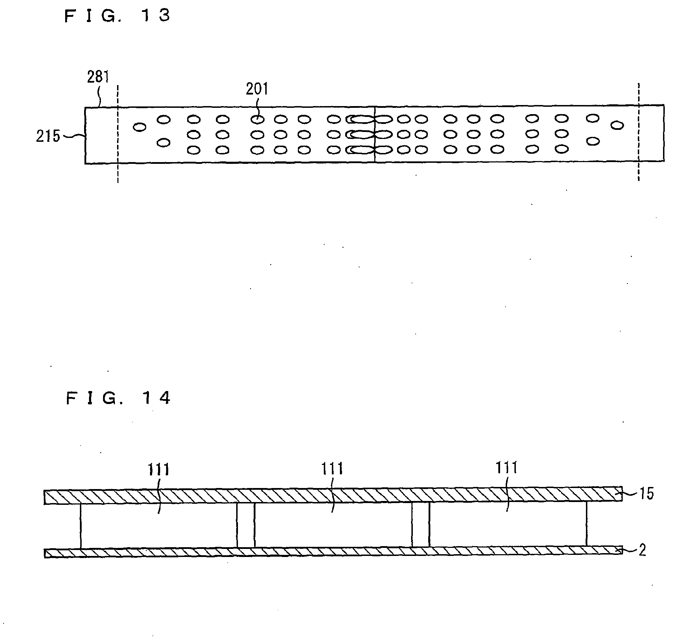

Further, for example, Patent Literature 2 discloses a light emitter structure of the same kind. Furthermore, Patent Literature 2 discloses a structure in which reflecting dots for changing the direction of light are provided in a print pattern with a variation in density of the reflecting dots along the length of an elongated light emitter (see Fig. 13). As shown in Fig. 13, the density of the reflecting dots 201 varies from a light input end 215 and from a mixing section 281 to the center of the elongated light emitter. Further, in order to attain uniform light extraction and illumination from one end of the light emitter to the other end, Patent Literature 2 discloses varying the reflecting dots 201 in size and shape as a function of distance from the mixing section 281, as well as from the light input end 215.

### Citation List

Patent Literature 1
Japanese Patent Application Publication, Tokukai, No. 2008-34372 A (Publication Date: February 14, 2008)
Patent Literature 2
Japanese Patent Application Publication, Tokukai, No. 2009-43706 A (Publication Date: February 28, 2009)

### Summary of Invention

### Technical Problem

In the conventional configuration, as shown in Fig. 14, light guides 111 each having a rectangular cross-section have been fixedly sandwiched between a chassis 2 and a diffusing plate 15. However, because the diffusing plate 15 is weak in strength, the fixation of the light guides 111 has been insufficient. Therefore, there have been such problems as occurrence of luminance unevenness due to a shift in position of the light guides 111, breakage due to contact of the light guides 111 with a liquid crystal panel or the like, etc.

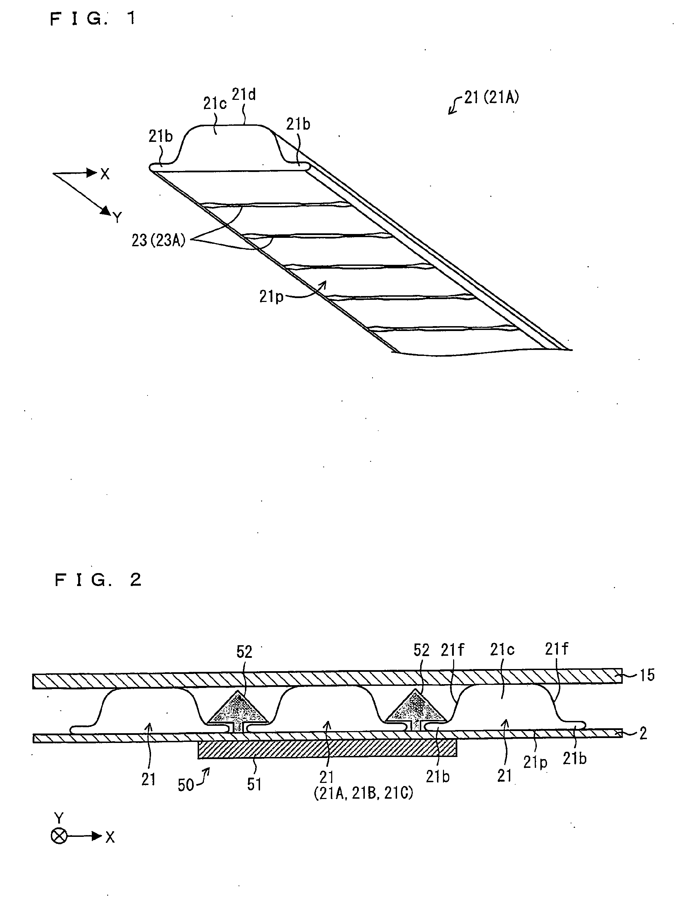

These problems can possibly be solved by providing light guides 21 each having a such a T-shaped cross-section as to have a thick-walled part 21c in the center and thin-walled fixed parts 21b at both ends of the thick-walled part 2 1 c and, for example, by interposing the fixed parts 21b and the chassis 2 together between upper holding members 52 and a lower holding member 51 of a fixing piece 50, as shown in Fig. 2, which is an explanatory diagram of the present invention.

However, because the thin-walled fixed parts 21b differ in optical characteristic from the thick-walled part 21c, the mere provision of the fixed parts 21b for fixation results in a bright line or a dark line at a joint between light guides, thus making it difficult to achieve uniform luminance.

The present invention has been made in view of the foregoing conventional problems, and it is an object of the present invention to provide: a light source module which has light guides each provided with a fixed part and which reduces the occurrence of luminance unevenness at a joint between light guides; and an electronic apparatus including such a light source module.

### Solution to Problem

In order to solve the foregoing problems, a light source module according to the present invention is a light source module including: a plurality of light guides provided in parallel with each other along their length; a plurality of light sources for causing light to enter through at least one end surface of each of the light guides perpendicular to the length of the light guide; a plurality of optical path changing sections, provided on that side of each of the light guides through which light exits or that opposite side of each of the light guides which faces a reflecting sheet, which serve to take out light guided inside of the light guides; and a chassis on which the light guides are mounted, each of the light guides having a fixed part, formed at at least one side edge of a cross-section of the light guide orthogonal to the length of the light guide, with which the light guide is fixed to the chassis, the fixed part being thinner than the other side edge of the cross-section of the light guide orthogonal to the length of the light guide or a thick-walled part that is a central part of the cross-section of the light guide orthogonal to the length of the light guide, the optical path changing sections varying in density of arrangement between (i) a region where the light guide varies in thickness between the thick-walled part and the fixed part and (ii) other regions along a direction orthogonal to the length of the light guide.

According to the foregoing configuration, the provision of the thin-walled fixed part at the side edge of the thick-walled part makes it possible to stably fix the light guide to the chassis via the fixed part. This eliminates such problems as occurrence of luminance unevenness due to a shift in position of the light guide, breakage due to contact of the light guide with a liquid crystal panel or the like, etc.

Further, although the optical characteristic in the cross-section of the light guide orthogonal to the length of the light guide is influenced by the provision of the thin-walled fixed part, this influence can be compensated for by providing the optical path changing sections whose density of arrangement in the cross-section has been adjusted. As a result, there appears no bright line or no dark line at a joint between light guides; therefore, there occurs no luminance unevenness.

This makes it possible to provide a light source module that allows a light guide to be stably fixed and imparts uniform luminance to a display.

Further, an electronic apparatus according to the present invention includes such a light source module as described above.

The foregoing configuration brings about an effect of making it possible to provide an electronic apparatus including a light source module that allows a light guide to be stably fixed, causes no bright line or no dark line at a joint between light guides, and can achieve a reduction in luminance unevenness.

### Advantageous Effects of Invention

A light source module according to the present invention is configured such that: each of the light guides has a fixed part, formed at at least one side edge of a cross-section of the light guide orthogonal to the length of the light guide, with which the light guide is fixed to the chassis, the fixed part being thinner than the other side edge of the cross-section of the light guide orthogonal to the length of the light guide or a thick-walled part that is a central part of the cross-section of the light guide orthogonal to the length of the light guide; and, the optical path changing sections vary in density of arrangement between (i) a region where the light guide varies in thickness between the thick-walled part and the fixed part and (ii) other regions along a direction orthogonal to the length of the light guide.

Further, an electronic apparatus according to the present invention includes such a light source module as described above.

This brings about an effect of making it possible to provide: a light source module that allows a light guide to be stably fixed and imparts uniform luminance to a display; and an electronic apparatus including such a light source module.

Additional objects, features, and strengths of the present invention will be made clear by the description below. Further, the advantages of the present invention will be evident from the following explanation in reference to the drawings.

### Brief Description of Drawings

Fig. 1
   Fig. 1 is a perspective view showing an example of the structure of a light guide constituting a light guide plate in accordance with an embodiment of a light source module of the present invention.
Fig. 2
   Fig. 2 is a cross-sectional view showing a structure for mounting of light guides in the light source module.
Fig. 3

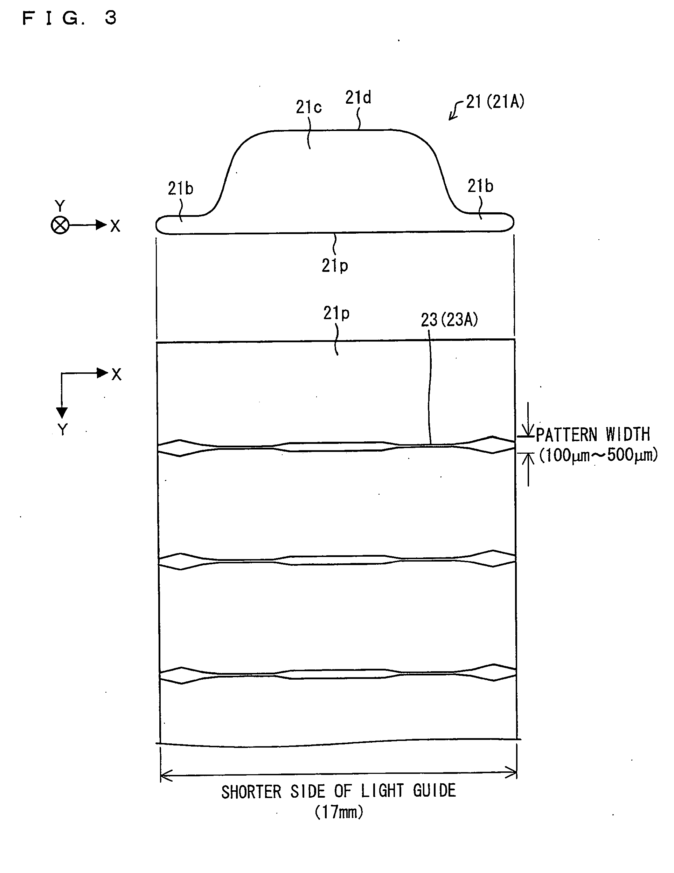

   Fig. 3 is a front view and a plan view both showing an example of the structure of the light guide shown in Fig. 1.
Fig. 4

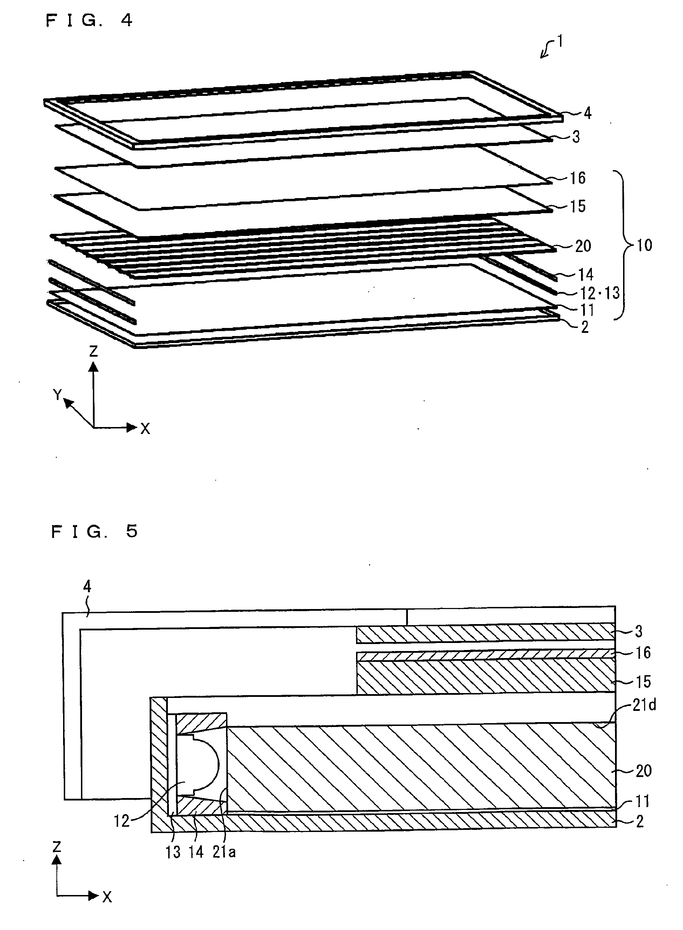

   Fig. 4 is an exploded perspective view showing the configuration of a liquid crystal display apparatus including the light source module.
Fig. 5
   Fig. 5 is a cross-sectional view showing the configuration of a relevant part of the liquid crystal display apparatus including the light source module.
Fig. 6

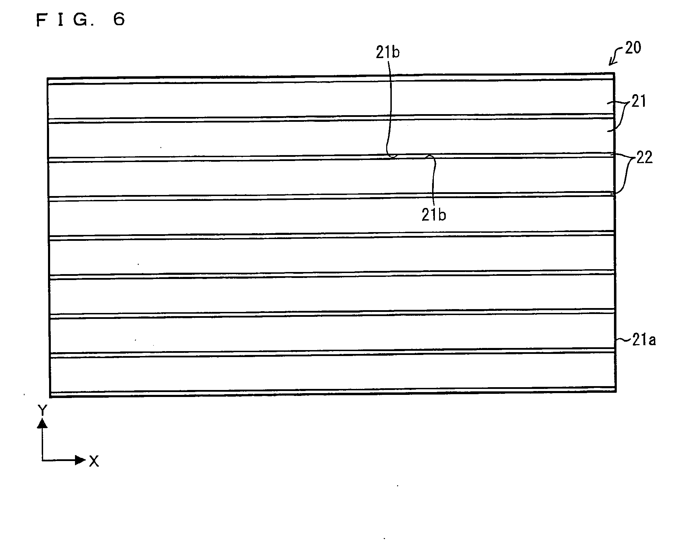

   Fig. 6 is a plan view showing the configuration of light guide plates in the light source module.
Fig. 7

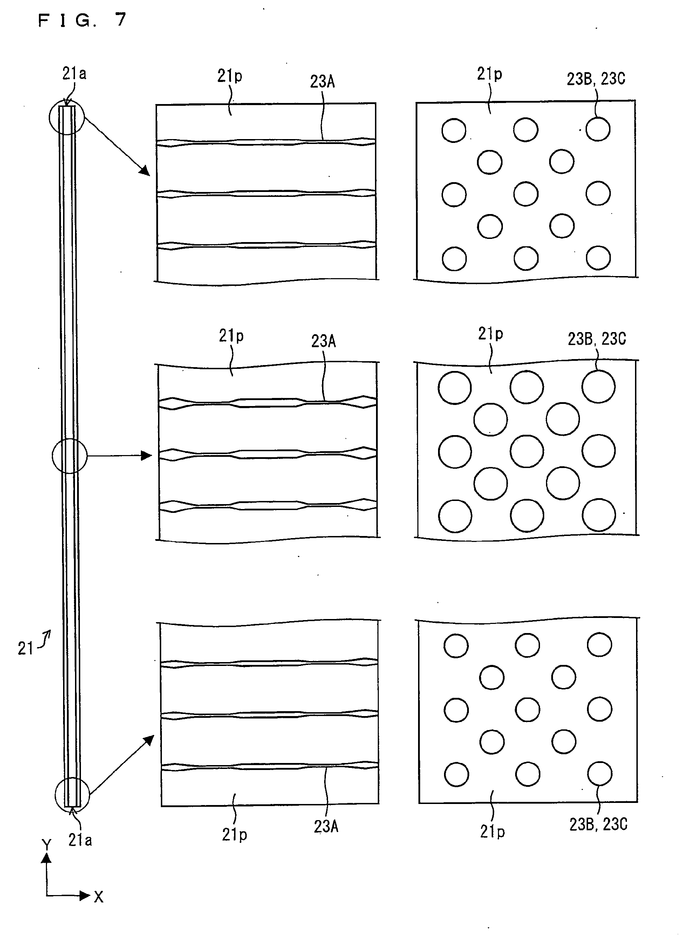

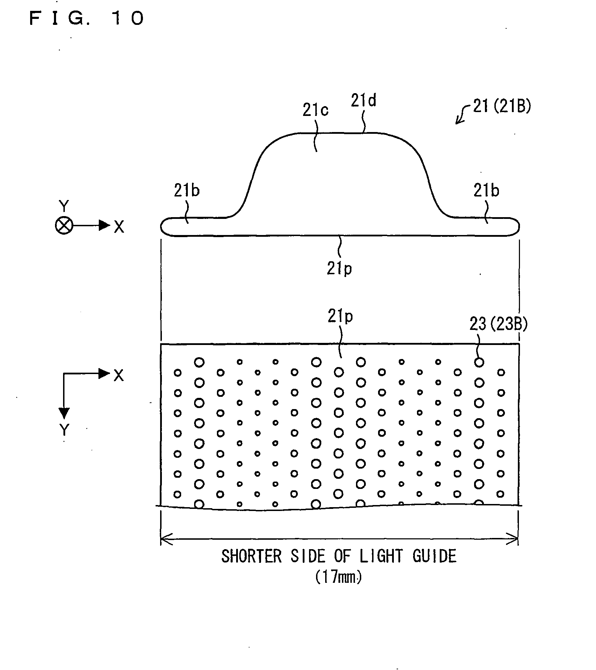

   Fig. 7 is an explanatory diagram schematically showing the structures of such light guides as shown in Figs. 1 and 10.
Fig. 8

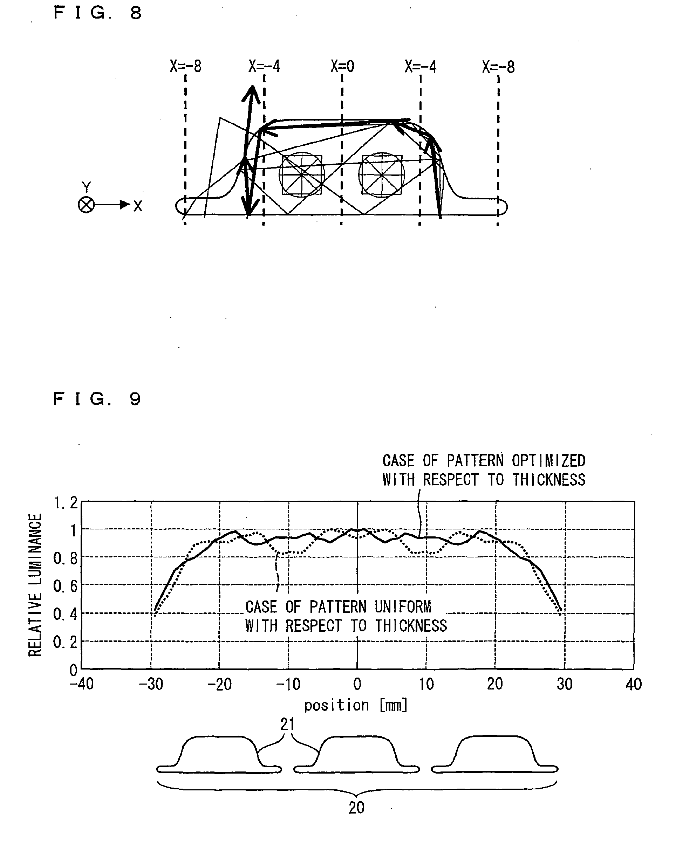

   Fig. 8 explains how to determine a print pattern of light scatterers to be formed on the light guide shown in Fig. 1, and shows an optical path as seen in a cross-section of the light guide along the lateral direction.
Fig. 9
   Fig. 9 is an explanatory diagram showing a state of luminance uniformed by a light source module including such light guides as shown in Fig. 1.
Fig. 10
   Fig. 10 is a front view and a plan view both showing another example of the structure of a light guide constituting a light guide plate in accordance with an embodiment of a light source module of the present invention.
Fig. 11

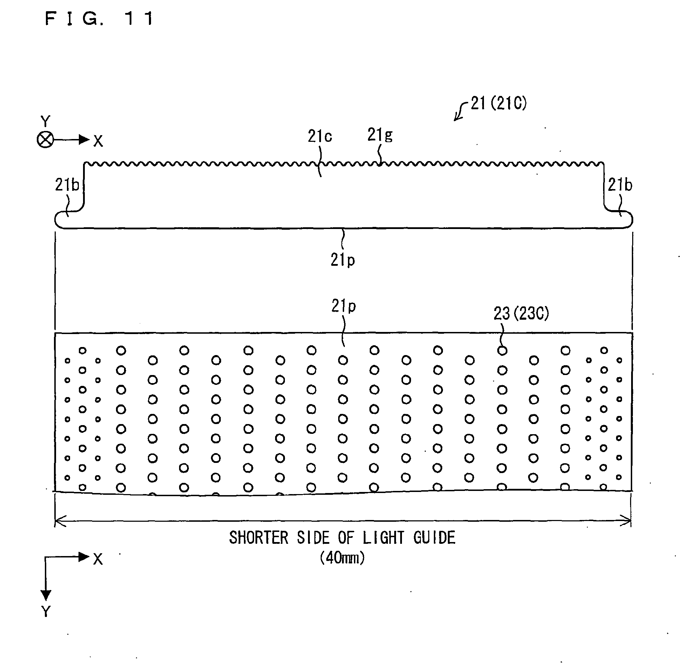

   Fig. 11 is a front view and a plan view both showing still another example of the structure of a light guide constituting a light guide plate in accordance with an embodiment of a light source module of the present invention.
Fig. 12
   Fig. 12 includes: (a) a plan view showing the configuration of a conventional light source module; (b) a front view showing the configuration of the light source module; and (c) a cross-sectional view taken along the line A-A' of (a).
Fig. 13
   Fig. 13 is a plan view showing the configuration of a conventional light source module.
Fig. 14
   Fig. 14 is a cross-sectional view showing a structure for mounting of light guides in a conventional light source module.
Fig. 15

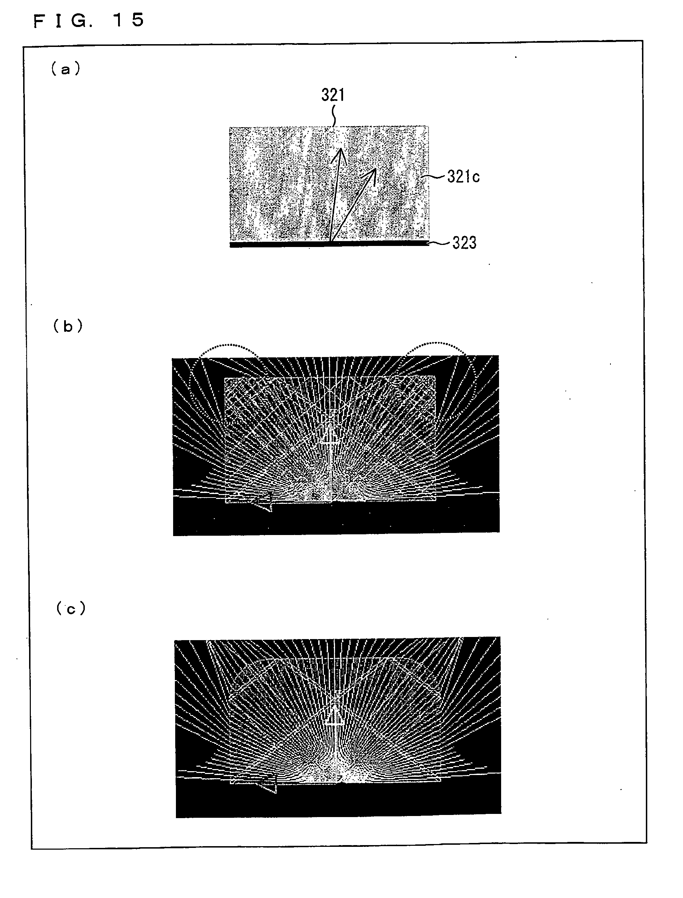

   Fig. 15, showing a background of the present invention, includes: (a) a cross-sectional view of a light guide showing a position of emission of light from light sources in the case of an experiment for comparing (i) a light guide having a rectangular cross-section and (ii) a light guide having such a curved cross-section as to have chamfered top corners, concerning an optical path along which light from light sources is emitted through a light guide; (b) a cross-sectional view of a light guide showing an optical path in a light guide having such a rectangular cross-section as to have non-chamfered top corners; and (c) a cross-sectional view of a light guide showing an optical path in a light guide having such a curved cross-section as to have chamfered top corners.
Fig. 16

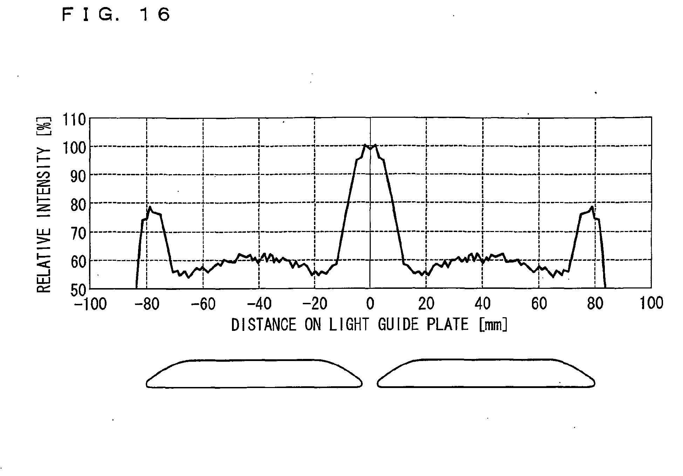

   Fig. 16, showing a background of the present invention, is a graph showing a relationship between the position and luminance of a light source module including light guides each having such a curved shape that its thick-walled part has chamfered top corners.

### Description of Embodiments

The present invention is described below more in detail by way of Examples and Comparative Examples; however, the present invention is in no way limited to these examples.

An embodiment of the present invention is described below with reference to Figs. 1 through 11.

First, the configuration of a liquid crystal display apparatus 1 that is an example of an electronic apparatus including a light source module 10 of the present embodiment is described below with reference to Figs. 4 through 6.

As shown in Fig. 4, the liquid crystal display apparatus 1 is constituted by a chassis 2, a light source module 10, a liquid crystal panel 3, and a bezel 4, starting from the bottom. The light source module 10 is constituted by: a reflecting sheet 11, which serves as a reflecting plate; LEDs (light-emitting diodes) 12, which serve as light sources, and LED substrates 13; reflectors 14; an light guide plate 20, a diffusing plate 15; and an optical sheet group 16, starting from the bottom. It should be noted that the optical sheet group 16 does not need to be present in the present invention.

As shown in Fig. 5, the LEDs 12, the LED substrates 13, and the reflectors 14 are provided at both ends of the light guide plate 20, whereby light from the LEDs 12 enters through one end surface 21a of the light guide plate 20 and the liquid crystal panel 3 is irradiated with light from an emission surface 21d of the light guide plate 20 through the diffusing plate 15 and the optical sheet group 16. Therefore, the light source module 10 of the present embodiment employs a side-edge (also referred to as "side-light") method.

In the present embodiment, the diffusing plate 15 is provided above an emission surface 21d of a light guide 21 with a distance D, for example, of 2 mm therebetween. This makes it possible to make luminance unevenness less than in a case where the diffusing plate 15 is in close contact with the emission surface 21d of the light guide 21.

Unlike a CRT (cathode-ray tube) display apparatus, the liquid crystal display apparatus 1 suffers from blurring of a moving image. That is, the CRT display device gives little sense of afterimage, because between a light-emitting period of a pixel in one frame and a light-emitting period of the pixel in the next frame, there is a non-light-emitting period during which the pixel does not emit light. On the other hand, the liquid crystal display apparatus 1 employs a "hold-type" display method without such a non-light-emitting period and therefore gives a sense of afterimage, and this sense of afterimage is perceived by users as blurring of a moving image.

Proposed in view of this for the backlight-type liquid crystal display apparatus 1 is a backlight blinking technique for inserting a black display between one image display and another by dividing the light source module 10, which is a backlight, into parts and by turning off these parts in sequence in synchronization with the timing of application of video signals to the liquid crystal panel 3. This makes it possible to realize a pseudo impulse-type display and suppress a sense of afterimage.

In order to carry out the backlight blinking, the light source module 10 of the present embodiment is constituted by dividing the light guide plate 20 into a plurality of light guides 21 and disposing these light guides 21 in parallel with each other along their length with gaps 22 therebetween, as shown in Fig. 6. Therefore, in the present embodiment, as shown in Fig. 5, the LEDs 12 cause light to enter the after-mentioned thick-walled part 21c (see Fig. 2) through one end surface 21a of each of the light guides 21 perpendicular to the length of the light guide 21. It should be noted that the light may enter through the other end surface of the light guide 21 perpendicular to the length of the light guide 21, instead of entering through the one end surface 21a. Alternatively, the light may enter through both the one end surface and the other end surface. That is, in the present invention, the light only needs to enter through at least the one end surface 21a.

In consideration of thermal expansion and manufacturing tolerance of the light guides 21, it is necessary to dispose the light guides 21, into which the light guide plate 20 has been divided, so that they are parallel to each other along their length with gaps 22 of approximately 1 to 2 mm therebetween.

Next, a structure for mounting of the light guides 21 in the light source module 10 is described with reference to Fig. 2.

As shown in Fig. 2, each of the light guides 21, into which the light guide plate 20 has been divided, has such a T-shaped cross-section as to have a thick-walled part 21c in the center and thin-walled fixed parts 21b at both ends of the thick-walled part 21c. That is, each of the fixed parts 21b is in such a shape that that surface of the fixed part 21b which faces the chassis 2 is flush with that surface of the thick-walled part 21c which faces the chassis 2. Moreover, the light guide plate 20 is fixed to the chassis 2 by interposing the fixed parts 21b and the chassis 2 together between upper holding members 52 and a lower holding member 51 of a fixing piece 50.

This makes it possible to stably fix the plurality of light guides 21 to the chassis 2, thus preventing the occurrence of luminance unevenness due to a shift in position, breakage due to contact with a liquid crystal panel or the like, etc., as has been done conventionally.

Furthermore, the detailed shape of each of the light guides 21 is as follows: Each of the fixed parts 21b, which serve as side-edge parts across which the light guide 21 faces its adjacent light guide 21, is thinner than the thick-walled part 21c, which serves as the central part of a cross-section of the light guide 21 orthogonal to the length of the light guide 21. As a result, each of the light guides 21 of the present embodiment has such a T-shaped cross-section as to have absent parts 21f at its side-edge parts toward the reflecting sheet 11 and, as such, is composed of a thick-walled part 21c formed thick and fixed parts 21b formed thin.

It should be noted that the structure of the fixing piece 50 is not limited to that shown in Fig. 2 and it is possible to select a fixing piece 50 of any structure that allows the fixed parts 21b to be mounted directly or indirectly to the chassis 2.

The following describes a configuration for preventing luminance unevenness from occurring at a joint between light guides 21 due to the provision of the fixed parts 21b.

Light traveling through a light guide 21 exits the light guide 21 through an emission surface 2 1 d when the total reflection conditions are broken by a change in angle at which the light travels through the light guide 21 due to collision of the light with light scatterers 23 serving as optical path changing sections, and then travels toward the diffusing plate 15. Therefore, a luminance distribution of emitted light can be controlled by determining where on the light guide 21 and how densely the light scatterers 23 are arranged.

The following describes a print pattern of light scatterers 23 for compensating for a change in optical characteristic as caused by providing the thin-walled fixed parts 21b.

In the present embodiment, the light scatterers 23 are formed, for example, by printing light-scattering microparticles dispersed in a polymer; however, the light scatterers 23 are not necessarily limited to this, and may be formed by another method. For example, the light-scattering particles may be a fluorescent substance. Alternatively, the light scatterers 23 may be formed by forming minute concave-convex shapes such as prisms. Alternatively, it is also possible to form a pattern by providing a rough surface as an emission surface or reflecting-sheet-facing surface by blasting or the like.

### [Print Pattern A]

A first example of a pattern (print pattern A) of light scatterers 23 to be formed on a light guide 21 is described with reference to Figs. 1, 3, and 7 through 9.

Figs. 1 and 3 show a light guide 21 having light scatterers 23 formed in a print pattern A. As shown in Figs. 1 and 3, a light guide 21A has light scatterers 23A formed in the shape of a print pattern A on that surface of the thick-walled part 21c and fixed parts 21b which faces the chassis 2 (such a surface being hereinafter referred to as "pattern surface 21p"). It should be noted that the light guide 21 and light scatterers 23 according to the print pattern A are denoted as "light guide 21A" and "light scatterers 23A" to be particularly distinguished from another light guide 21 and other light scatterers 23.

For example, the light guide 21A has its longer sides each having a length of 1358.5 mm, its shorter sides each having a length of 17 mm, its thick-walled part 21c, i.e. central part, having a thickness of 5 mm, and its fixed parts 21b, i.e. side-edge parts, each having a thickness of 1 mm and a length of 2.5 mm. It should be noted that in the print pattern A, it is preferable that the light guide 21A have its shorter sides each having a length of 15 to 16 mm.

The print pattern A is a laddery pattern of light scatterers 23A formed on the pattern surface 21p of the light guide 21A, and is symmetrical about the center of the thick-walled part 21c. As evidenced by Fig. 3, the print pattern A is wide in pattern width in those regions of the pattern surface 21p which face in the opposite direction from those regions (parallel portions) of the emission surface 21d which are parallel to the diffusing plate 15, and is narrow in pattern width in those regions of the pattern surface 21p which face in the opposite direction from those regions (inclined portions, whose angle may be vertical) of the emission surface 2 1 d which are not parallel to the diffusing plate 15. However, because it is preferable that each of the light scatterers 23A vary smoothly in pattern width, the light scatterers 23A becomes narrower, starting from that region of the pattern surface 21p which faces in the opposite direction from an edge of such a parallel portion in connection with such an inclined portion. In the present embodiment, each light scatterer 23A has a pattern width of 100 µm to 500 µm, for example.

It should be noted here that because the luminance is attenuated with an increase in distance from the LEDs 12, i.e. the light sources, it is necessary to make the density of arrangement of the light scatterers 23A higher with an increase in distance from the LEDs 12.

Accordingly, as shown in Fig. 7, the pattern width of each light scatterer 23A may be made wider with an increase in distance from an end of the light guide 21A toward its center along its length. Alternatively, the light scatterers 23A may be placed at shorter pattern intervals with an increase in distance from an end of the light guide 21A toward its center along its length. In Fig. 7, which shows a case where light from the LEDs 12 enters through both end surfaces 21a, those light scatterers 23A in the central part of the light guide plate 20 are wide in pattern width.

How to determine a print pattern of light scatterers 23 is described here with reference to Fig. 8.

Fig. 8 schematically shows an optical path as seen in a cross-section of the light guide 21 along the lateral direction. For example, in the case of an arrangement of light scatterers 23 in the vicinity of X = -4, light reflected by the light scatterers 23 causes total reflection inside of the light guide 21 as indicated by arrows in the drawing and exits through the vicinity of X = 4. This shows that light exits through a place other than the place where the light scatterers 23 are arranged.

Accordingly, by allowing beams of light to enter at positions (X = -8 to 8 in Fig. 8) along the lateral direction and finding where each of the beams of light exits, data on a luminance distribution of light reflected by the light scatterers 23 in the respective positions can be obtained. Moreover, by analyzing such a pattern shape that the sum of the data constitutes a uniform distribution, the shape of a print pattern having such a thickness distribution as shown in Fig. 3 is obtained.

In this way, a print pattern of light scatterers 23 can be determined by obtaining correlation data indicating which part is illuminated when a pattern is placed in a particular part of the pattern surface 21p and by finding a correlation between a distribution of print patterns and a luminance distribution.

Next, an example of luminance uniformed by forming light scatterers 23 in a print pattern A in a light source module 10 including three light guides 21 is described with reference to Fig. 9.

As shown in Fig. 9, in the case of an arrangement of light scatterers in a pattern uniform with respect to the section thickness of each light guide, approximately 20% of irregularities in luminance were observed (as indicated by a dotted line). On the other hand, in the case of an arrangement of light scatterers in a pattern whose density has been optimized with respect to the section thickness of each light guide 21 (see Fig. 3), an improvement in irregularities in luminance was observed (as indicated by a solid line).

As described above, the use of the print pattern A (see Figs. 1 and 3) to decrease the pattern width of each light scatterer 23A in those regions of the pattern surface 21p which face in the opposite direction from the inclined portions of the light guide 21A makes it possible to suppress emission of light from the inclined portions, thus preventing the occurrence of luminance unevenness.

Thus, in the print pattern A, the density of the pattern is adjusted along the lateral direction (or normally, is decreased in those regions facing in the opposite direction from the inclined portions) by varying the pattern width of each light scatterer 23A in those regions facing in the opposite direction from the inclined portions of the light guide 21A, whereby a uniform luminance distribution is achieved.

### [Print Pattern B]

A second example of a pattern (print pattern B) of light scatterers 23 to be formed on a light guide 21 is described with reference to Fig. 10.

Fig. 10 shows a light guide 21 having light scatterers 23 formed in a print pattern B. As shown in Fig. 10, a light guide 21B has light scatterers 23B formed in the shape of a print pattern B on that surface of the thick-walled part 21c and fixed parts 21b which faces the chassis 2 (such a surface being hereinafter referred to as "pattern surface 21p"). It should be noted that the light guide 21 and light scatterers 23 according to the print pattern B are denoted as "light guide 21B" and "light scatterers 23B" to be particularly distinguished from another light guide 21 and other light scatterers 23.

For example, as in the case of the print pattern A, the light guide 21B has its longer sides each having a length of 1358.5 mm, its shorter sides each having a length of 17 mm, its thick-walled part 21c, i.e. central part, having a thickness of 5 mm, and its fixed parts 21b, i.e. side-edge parts, each having a thickness of 1 mm and a length of 2.5 mm. It should be noted that in the print pattern B, it is preferable that the light guide 21B have its shorter sides each having a length of 15 to 16 mm.

The print pattern B is a polka-dot pattern of circular light scatterers 23B formed on the pattern surface 21p of the light guide 21B, and is symmetrical about the center of the thick-walled part 21c. As evidenced by Fig. 10, the print pattern B is large in dot diameter in those regions of the pattern surface 21p which face in the opposite direction from those regions (parallel portions) of the emission surface 21d which are parallel to the diffusing plate 15, and is small in dot diameter in those regions of the pattern surface 21p which face in the opposite direction from those regions (inclined portions, whose angle may be vertical) of the emission surface 21d which are not parallel to the diffusing plate 15. However, because it is preferable that the light scatterers 23B vary smoothly in dot diameter, the light scatterers 23B become smaller in dot diameter, starting from that region of the pattern surface 21p which faces in the opposite direction from an edge of such a parallel portion in connection with such an inclined portion. In the present embodiment, each light scatterer 23B has a dot diameter of 100 µm to 500 µm, for example.

It should be noted here that because the luminance is attenuated with an increase in distance from the LEDs 12, i.e. the light sources, it is necessary to make the density of arrangement of the light scatterers 23B higher with an increase in distance from the LEDs 12.

Accordingly, as shown in Fig. 7, the light scatterers 23B may become larger in dot diameter with an increase in distance from an end of the light guide 21B toward its center along its length. Alternatively, the light scatterers 23B may be placed at shorter dot intervals with an increase in distance from an end of the light guide 21B toward its center along its length. In Fig. 7, which shows a case where light from the LEDs 12 enters through both end surfaces 21a, those light scatterers 23B in the central part of the light guide plate 20 are large in dot diameter. It should be noted that in order to help show only a distribution of light scatterers 23B along the length of the light guide 21B, Fig. 7 shows a distribution of light scatterers 23B along the lateral direction as being uniform.

As described above, the use of the print pattern B (see Fig. 10) to decrease the dot diameter of each light scatterer 23B in those regions of the pattern surface 21p which face in the opposite direction from the inclined portions of the light guide 21B makes it possible to suppress emission of light from the inclined portions, thus preventing the occurrence of luminance unevenness at a joint between light guides 21B.

Thus, in the print pattern B, the density of the pattern is adjusted along the lateral direction (or normally, is decreased in those regions facing in the opposite direction from the inclined portions) by varying the dot diameter of the light scatterers 23B and/or the dot intervals between the light scatterers 23B in those regions facing in the opposite direction from the inclined portions of the light guide 21B, whereby a uniform luminance distribution is achieved.

### [Print Pattern C]

A third example of a pattern (print pattern C) of light scatterers 23 to be formed on a light guide 21 is described with reference to Fig. 11.

Fig. 11 shows a light guide 21 having light scatterers 23 formed in a print pattern C. As shown in Fig. 11, a light guide 21C has light scatterers 23C formed in the shape of a print pattern C on that surface of the thick-walled part 21c and fixed parts 21b which faces the chassis 2 (such a surface being hereinafter referred to as "pattern surface 21p"). It should be noted that the light guide 21 and light scatterers 23 according to the print pattern C are denoted as "light guide 21C" and "light scatterers 23C" to be particularly distinguished from another light guide 21 and other light scatterers 23.

For example, unlike in the case of the print pattern A or B, the light guide 21C has its longer sides each having a length of 1358.5 mm (possibly varying from 900 to 1600 mm, depending on the screen size), its shorter sides each having a length of 40 mm to 80 mm (possibly having a length 40 mm to 100 mm or greater), its thick-walled part 21c, i.e. central part, having a thickness of 4 mm, and its fixed parts 21b, i.e. side-edge parts, each having a thickness of 1 mm and a length of 2 mm. Furthermore, the light guide 21, which has the light scatterers 23 formed in the print pattern C, has grooves 24g formed on the emission surface 21d of the thick-walled part 21c in such a way as to extend along the length of the light guide 21. The grooves 24g are placed at pitches of 0.6 mm (or possibly 0.6 mm or greater, e.g. 1 mm) and each have a depth of 0.18 mm (or possibly 0.18 mm or greater, e.g. 0.23 mm, depending on the pitch). Further, the light guide 21C has a vertical surface between the thick-walled part 21c and each fixed part 21b and, as such, does not have such an inclined portion as in the case of the print pattern A or B.

The print pattern C is a polka-dot pattern of circular light scatterers 23C formed on the pattern surface 21p of the light guide 21, and is symmetrical about the center of the thick-walled part 21c. As evidenced by Fig. 11, the print pattern C is large in dot diameter in those regions of the pattern surface 21p which correspond to the thick-walled part 21c, and is substantially uniform. Further, provided in a position corresponding to a boundary between the thick-walled part 21c and each fixed part 21b is a column of large-diameter dots. Moreover, provided on either side of the column are columns of small-diameter dots. That is, one of the two columns of small-diameter dots is provided in the thick-walled part 21c, and the other in the fixed part 21b. In the present embodiment, each light scatterer 23C has a dot diameter of 100 µm to 500 µm (or possibly 100 µm to 2000 µm), for example.

Also in the print pattern C, as shown in Fig. 7, as with the print pattern B, the light scatterers 23C may become larger in dot diameter with an increase in distance from an end of the light guide 21C toward its center along its length. Alternatively, the light scatterers 23C may be placed at shorter dot intervals with an increase in distance from an end of the light guide 21C toward its center along its length.

Thus, in the print pattern C (see Fig. 11), the light guide 21C does not have an inclined portion for a smooth change in thickness between the thick-walled part 21c and each fixed part 21b and has grooves 21g formed on the emission surface 21d of the thick-walled part 21c in such a way as to extend along the length of the light guide 21C. Moreover, the density of the pattern is adjusted (or normally, is decreased) by varying the dot diameter of the light scatterers 23C and/or the dot intervals between the light scatterers 23C in the vicinity of a position corresponding to a boundary between the thick-walled part 21c and each fixed potion 21b, whereby a uniform luminance distribution is achieved.

### [Supplementary Information]

It should be noted that the light source module 10 of the present embodiment can be configured as follows:

Although each of the print patterns A and B shows a case where the light scatterers 23 are provided on that side of the light guide 21 which faces the reflecting sheet 11 (i.e., in those regions of the pattern surface 21p which face in the opposite direction from the inclined portions), the print patterns A and B are not necessarily limited to this. In each of the print patterns A and B, the light scatterers 23 may be provided on the emission surface 21 d of the light guide 21 (i.e., in the inclined portions). This brings about the same effect as in the case where the light scatterers 23 are provided on that side of the light guide 21 which faces the reflecting sheet 11. However, the concave and convex surfaces on the emission surface 21d of the light guide 21 make printing difficult. This is why in the present embodiment the light scatterers 23 are formed on the pattern surface 21p.

It is preferable that each of the light scatterers 23 (in the print pattern A) vary in pattern width and the light scatterers 23 (in the print pattern B) vary in dot diameter prior to a change in angle from the thick-walled part 21c to each fixed part 21b. That is, it is preferable that the range within which the pattern is adjusted (i.e., the range within which there is a decrease in pattern width or dot diameter) be a range including the inclined portions and areas therearound.

Although the print pattern B shows an example of arrangement of circular dots, the dots can be in various shapes such as an elliptical shape, a rectangular shape, etc.

In the print pattern C, the light guide 21C has grooves 21g formed on the emission surface 21d of the thick-walled part 21c. These grooves 21g function to make it easy to break the total reflection conditions for light guided inside of the light guide 21 and take the light out of the light guide 21. Therefore, the shape of each light scatterer 23 is not limited to the shape of a dot, and may be the shape of such a strip as in the print pattern A. Further, the formation of the grooves 21g allows the light guide 21 to have a greater width.

It is preferable that each of the fixed parts 21b be in such a shape that that surface of the fixed part 21b which faces the chassis is flush with that surface of the thick-walled part 21c which faces the chassis, because when each of the fixed parts 21b be in such a shape, the surface where the light guide 21 and the chassis 2 touch each other becomes wider. However, the fixed parts 21b are not limited to this. That is, each of the fixed parts 21b may be in any position so long as the light guide 21 can be fixed to the chassis 2. For example, each of the fixed parts 21b may be in a position closer to the emission surface 21d.

Further, the liquid crystal display apparatus 1, which is an electronic apparatus of the present embodiment, includes a light source module 10 of the present embodiment. This makes it possible to provide a liquid crystal display apparatus 1 including a light source module 10 capable of reducing the occurrence of luminance unevenness.

As described above, a light source module 10 according to the present embodiment is a light source module 10 including: a plurality of light guides 21 provided in parallel with each other along their length; a plurality of LEDs (light sources) 12 for causing light to enter through at least one end surface 21a of each of the light guides 21 perpendicular to the length of the light guide 21; a plurality of light scatterers (optical path changing sections) 23, provided on that side (emission surface 21d) of each of the light guides 21 through which light exits or that opposite side (pattern surface 21p) of each of the light guides which faces a reflecting sheet 11, which serve to take out light guided inside of the light guides 21; and a chassis 2 on which the light guides 21 are mounted, each of the light guides 21 having a fixed part 21b, formed at at least one side edge of a cross-section of the light guide 21 orthogonal to the length of the light guide 21, with which the light guide 21 is fixed to the chassis 2, the fixed part 21b being thinner than the other side edge of the cross-section of the light guide 21 orthogonal to the length of the light guide 21 or a thick-walled part 21c that is a central part of the cross-section of the light guide 21 orthogonal to the length of the light guide 21, the light scatterers (optical path changing sections) 21 varying in density of arrangement between (i) a region where the light guide 21 varies in thickness between the thick-walled part 21c and the fixed part 21b and (ii) other regions along a direction orthogonal to the length of the light guide 21.

Thus, the provision of the thin-walled fixed part 21b at the side edge of the thick-walled part 21c makes it possible to stably fix the light guide 21 to the chassis 2 via the fixed part 21b. This eliminates such problems as occurrence of luminance unevenness due to a shift in position of the light guide 21, breakage due to contact of the light guide 21 with a liquid crystal panel or the like, etc.

Further, although the optical characteristic in the cross-section of the light guide 21 orthogonal to the length of the light guide 21 is influenced by the provision of the thin-walled fixed part 21b, this influence can be compensated for by providing the light scatterers (optical path changing sections) 23 whose density of arrangement in the cross-section has been adjusted. As a result, there appears no bright line or no dark line at a joint between light guides 21; therefore, there occurs no luminance unevenness.

This makes it possible to provide a light source module 10 that allows a light guide 21 to be stably fixed and imparts uniform luminance to a display.

Furthermore, the light source module 10 according to the present invention is configured such that: the thick-walled part 21c of the light guide 21 (21A) has a chamfered corner at a boundary between the thick-walled part 21c and the fixed part 21b; and the light scatterers (optical path changing sections) 23 (23A) are provided in such strips as to extend along the direction orthogonal to the length of the light guide 21 (21A) and each of the strips has a smaller width in (i) the region where the light guide 21 (21A) varies in thickness between the thick-walled part 21c and the fixed part 21b than in (ii) the other regions, the region (i) including a region where the chamfered corner is provided.

Thus, each of the light scatterers 23A has a smaller pattern width (strip width) in the region (inclined portion or a surface facing in the opposite direction from the inclined portion) where the light guide 21A varies in thickness between the thick-walled part 21c and the fixed part 21b. This suppresses emission of light from the inclined portion, thus preventing luminance unevenness from occurring at a joint between light guides 21A. In this way, the density of the pattern along the direction (lateral direction) orthogonal to the length of the light guide 21A is easily adjusted by varying the pattern width (strip width) of each of the light scatterers 23A, whereby a uniform luminance distribution can be achieved.

Furthermore, the light source module 10 according to the present invention is configured such that: the thick-walled part 21c of the light guide 21 (21B) has a chamfered corner at a boundary between the thick-walled part 21c and the fixed part 21b; and the light scatterers (optical path changing sections) 23 (23B) are provided in circles and each of those circles in (i) the region where the light guide 21 (21B) varies in thickness between the thick-walled part 21c and the fixed part 21b has a smaller diameter than each of those circles in (ii) the other regions, the region (i) including a region where the chamfered corner is provided.

Thus, each of those light scatterers 23B in the region (inclined portion or a surface facing in the opposite direction from the inclined portion) where the light guide 21B varies in thickness between the thick-walled part 21c and the fixed part 21b has a smaller circle diameter (dot diameter). This suppresses emission of light from the inclined portion, thus preventing luminance unevenness from occurring at a joint between light guides 21B. In this way, the density of the pattern along the direction (lateral direction) orthogonal to the length of the light guide 21B is easily adjusted by varying the circle diameter (dot diameter) of the light scatterers 23B, whereby a uniform luminance distribution can be achieved.

Furthermore, the light source module according to the present invention is configured such that: the light scatterers (optical path changing sections) 23 (23C) are provided on that side of the light guide 21 (21C) which faces the reflecting sheet 11; and the light guide 21 (21C) has grooves 21g formed on that surface (emission surface 21d) of the thick-walled part 21c through which light exits and extending along the length of the light guide 21 (21C).

Thus, the grooves 21g on the surface (emission surface 21d) through which light exits, as well as the light scatterers (optical path changing sections) 23 on the side facing the reflecting sheet 11, function to make it easy to break the total reflection conditions for light guided inside of the light guide 21 and take the light out of the light guide 21. This makes it easier to achieve a uniform luminance distribution in comparison with the case where only the light scatterers (optical path changing sections) 23 are provided. This makes it possible to realize a light guide 21 that is greater in width along the direction (lateral direction) orthogonal to its length.

Furthermore, a liquid crystal display apparatus (electronic apparatus) 1 of the present embodiment includes a light source module 10 of the present embodiment. This makes it possible to provide an liquid crystal display apparatus including a light source module 10 that allows a light guide to be stably fixed, causes no bright line or no dark line at a joint between light guides, and can achieve a reduction in luminance unevenness.

### [Reason for the Occurrence of Luminance Unevenness]

A reason for the occurrence of luminance unevenness at a joint between light guides is explained here with reference to Figs. 15 and 16.

(a) through (c) of Fig. 15 explains an experiment for comparing (i) a light guide having a rectangular cross-section and (ii) a light guide having such a curved cross-section as to have chamfered top corners, concerning an optical path along which light from light sources is emitted through a light guide.

First, as shown in (a) of Fig. 15, the movement of light that is taken out in the case of emission of a beam of light from the central part of the lower surface of the thick-walled part 321c of a light guide 321 (or in the case of reflection of a beam of light by the central part of a light scatterer 323) is discussed.

On the one hand, (b) of Fig. 15 shows that when the thick-walled part 321c has a rectangular shape, part of the beams of light striking a side surface of the thick-walled part 321c is totally reflected; therefore, no beam of light can be taken out from the edge portions. It is obvious that this results in dark lines at the edge portions of the rectangular thick-walled part 321c.

On the other hand, (c) of Fig. 15 shows that when the light guide 321 has such a curved shape that its thick-walled part 321c has chamfered top corners, those beams of light emitted from the central part of the lower surface of the thick-walled part 321c of the light guide 321 and having entered the chamfered curved shapes have been gathered. This may result in bright lines at the chamfered portions of the rectangular thick-walled part 321c.

Fig. 16 is a graph showing a relationship between the position and luminance of a light source module including light guides 321 each having such a curved shape that its thick-walled part 321c has chamfered top corners. It should be noted that the light guide 321 has light scatterers 323 uniformly formed in a print pattern along the lateral direction on that surface of the light guide 321 which faces the reflecting sheet.

Moreover, Fig. 16 shows that in a light source module including light guides 321 each having such a curved shape that its thick-walled part 321c has chamfered top corners and each having rectangular light scatterers 323 formed in a laddery print pattern, there appears a bright line at the joint between the light guides 321.

As described above, a light source module according to the present invention is a light source module including: a plurality of light guides provided in parallel with each other along their length; a plurality of light sources for causing light to enter through at least one end surface of each of the light guides perpendicular to the length of the light guide; a plurality of optical path changing sections, provided on that side of each of the light guides through which light exits or that opposite side of each of the light guides which faces a reflecting sheet, which serve to take out light guided inside of the light guides; and a chassis on which the light guides are mounted, each of the light guides having a fixed part, formed at at least one side edge of a cross-section of the light guide orthogonal to the length of the light guide, with which the light guide is fixed to the chassis, the fixed part being thinner than the other side edge of the cross-section of the light guide orthogonal to the length of the light guide or a thick-walled part that is a central part of the cross-section of the light guide orthogonal to the length of the light guide, the optical path changing sections varying in density of arrangement between (i) a region where the light guide varies in thickness between the thick-walled part and the fixed part and (ii) other regions along a direction orthogonal to the length of the light guide.

According to the foregoing configuration, the provision of the thin-walled fixed part at the side edge of the thick-walled part makes it possible to stably fix the light guide to the chassis via the fixed part. This eliminates such problems as occurrence of luminance unevenness due to a shift in position of the light guide, breakage due to contact of the light guide with a liquid crystal panel or the like, etc.

Further, although the optical characteristic in the cross-section of the light guide orthogonal to the length of the light guide is influenced by the provision of the thin-walled fixed part, this influence can be compensated for by providing the optical path changing sections whose density of arrangement in the cross-section has been adjusted. As a result, there appears no bright line or no dark line at a joint between light guides; therefore, there occurs no luminance unevenness.

This makes it possible to provide a light source module that allows a light guide to be stably fixed and imparts uniform luminance to a display.

Furthermore, the light source module according to the present invention is configured such that: the thick-walled part of the light guide has a chamfered corner at a boundary between the thick-walled part and the fixed part; and the optical path changing sections are provided in such strips as to extend along the direction orthogonal to the length of the light guide and each of the strips has a smaller width in (i) the region where the light guide varies in thickness between the thick-walled part and the fixed part than in (ii) the other regions, the region (i) including a region where the chamfered corner is provided.

According to the foregoing configuration, furthermore, each of the optical path changing sections has a smaller pattern width (strip width) in the region (inclined portion or a surface facing in the opposite direction from the inclined portion) where the light guide varies in thickness between the thick-walled part and the fixed part. This suppresses emission of light from the inclined portion, thus preventing luminance unevenness from occurring at a joint between light guides. In this way, the density of the pattern along the direction (lateral direction) orthogonal to the length of the light guide is easily adjusted by varying the pattern width (strip width) of each of the optical path changing sections, whereby a uniform luminance distribution can be achieved.

Furthermore, the light source module according to the present invention is configured such that: the thick-walled part of the light guide has a chamfered corner at a boundary between the thick-walled part and the fixed part; and the optical path changing sections are provided in circles and each of those circles in (i) the region where the light guide varies in thickness between the thick-walled part and the fixed part has a smaller diameter than each of those circles in (ii) the other regions, the region (i) including a region where the chamfered corner is provided.

According to the foregoing configuration, furthermore, each of those optical path changing sections in the region (inclined portion or a surface facing in the opposite direction from the inclined portion) where the light guide varies in thickness between the thick-walled part and the fixed part has a smaller circle diameter (dot diameter). This suppresses emission of light from the inclined portion, thus preventing luminance unevenness from occurring at a joint between light guides. In this way, the density of the pattern along the direction (lateral direction) orthogonal to the length of the light guide is easily adjusted by varying the circle diameter (dot diameter) of the optical path changing sections, whereby a uniform luminance distribution can be achieved.

Furthermore, the light source module according to the present invention is configured such that: the optical path changing sections are provided on that side of the light guide which faces the reflecting sheet; and the light guide has grooves formed on that surface of the thick-walled part through which light exits and extending along the length of the light guide.

According to the foregoing configuration, furthermore, the grooves on the surface through which light exits, as well as the optical path changing sections on the side facing the reflecting sheet, function to make it easy to break the total reflection conditions for light guided inside of the light guide and take the light out of the light guide. This makes it easier to achieve a uniform luminance distribution in comparison with the case where only the optical path changing sections are provided. This makes it possible to realize a light guide that is greater in width along the direction (lateral direction) orthogonal to its length.

The present invention is not limited to the description of the embodiments above, but may be altered by a skilled person within the scope of the claims. An embodiment based on a proper combination of technical means disclosed in different embodiments is encompassed in the technical scope of the present invention.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention relates to: a light source module including a side-edge (referred to also as "side-light") light guide plate through which light from a light source is emitted in planar form; and an electronic apparatus including such a light source module. For example, the present invention can be applied to a light source module such as a backlight and an electronic apparatus such as a liquid crystal display apparatus.

### Reference Signs List

- 1: Liquid crystal apparatus (electronic apparatus)
- 2: Chassis
- 10: Light source module
- 11: Reflecting sheet
- 12: LED (light source)
- 21 (21A, 21B, 21C): Light guide
- 21a: End surface
- 21b: Fixed part
- 21c: Thick-walled part
- 21d: Emission surface
- 21g: Groove
- 21p: Pattern surface
- 23 (23A, 23B, 23C): Light scatterer (optical path changing section)

## Claims

**1.** A light source module comprising:
a plurality of light guides provided in parallel with each other along their length;
a plurality of light sources for causing light to enter through at least one end surface of each of the light guides perpendicular to the length of the light guide;
a plurality of optical path changing sections, provided on that side of each of the light guides through which light exits or that opposite side of each of the light guides which faces a reflecting sheet, which serve to take out light guided inside of the light guides; and
a chassis on which the light guides are mounted,
each of the light guides having a fixed part, formed at at least one side edge of a cross-section of the light guide orthogonal to the length of the light guide, with which the light guide is fixed to the chassis, the fixed part being thinner than the other side edge of the cross-section of the light guide orthogonal to the length of the light guide or a thick-walled part that is a central part of the cross-section of the light guide orthogonal to the length of the light guide,
the optical path changing sections varying in density of arrangement between (i) a region where the light guide varies in thickness between the thick-walled part and the fixed part and (ii) other regions along a direction orthogonal to the length of the light guide.

**2.** The light source module as set forth in claim 1, wherein:
the thick-walled part of the light guide has a chamfered corner at a boundary between the thick-walled part and the fixed part; and
the optical path changing sections are provided in such strips as to extend along the direction orthogonal to the length of the light guide and each of the strips has a smaller width in (i) the region where the light guide varies in thickness between the thick-walled part and the fixed part than in (ii) the other regions, the region (i) including a region where the chamfered corner is provided.

**3.** The light source module as set forth in claim 1, wherein:
the thick-walled part of the light guide has a chamfered corner at a boundary between the thick-walled part and the fixed part; and
the optical path changing sections are provided in circles and each of those circles in (i) the region where the light guide varies in thickness between the thick-walled part and the fixed part has a smaller diameter than each of those circles in (ii) the other regions, the region (i) including a region where the chamfered corner is provided.

**4.** The light source module as set forth in claim 2, wherein each of the strips has a width of 100 µm to 500 µm.

**5.** The light source module as set forth in claim 3, wherein each of the circles has a diameter of 100 µm to 2000 µm.

**6.** The light source module as set forth in claim 2 or 3, wherein the light guide has its shorter sides each having a length of 17 mm, its thick-walled part having a thickness of 5 mm, and its fixed part having a thickness of 1 mm and a length of 2.5 mm.

**7.** The light source module as set forth in any one of claims 1 to 3, wherein:
the optical path changing sections are provided on that side of the light guide which faces the reflecting sheet; and
the light guide has grooves formed on that surface of the thick-walled part through which light exits and extending along the length of the light guide.

**8.** The light source module as set forth in claim 7, wherein the light guide has its shorter sides each having a length of 40 mm to 100 mm, its thick-walled part having a thickness of 4 mm, and its fixed part having a thickness of 1 mm and a length of 2 mm.

**9.** The light source module as set forth in claim 7 or 8, wherein the grooves are placed at pitches of 0.6 mm and each have a depth of 0.18 mm.

**10.** An electronic apparatus comprising a light source module as set forth in any one of claims 1 to 9.
